# EUROPEAN PATENT SPECIFICATION

(11) **EP 0 965 426 B1**
(45) Date of publication and mention of the grant of the patent: **16.07.2003**
(21) Application number: 99201756.6
(22) Date of filing: 02.06.1999
(51) Int. Cl.: B29C 44/32, B29C 44/56, B65D 81/26, B29C 51/14

(54) **Process for manufacturing meat trays**
Verfahren zur Herstellung von Fleischverpackungsschalen
Procédé pour fabriquer des plateaux de viande

(30) Priority: 12.06.1998 IT RE980066
(43) Date of publication of application: 22.12.1999
(73) Proprietor: COOPBOX EUROPE S.P.A., 42100 Reggio Emilia (IT)
(72) Inventor: Movilli, Walter, 42100 Reggio Emilia (IT)
(74) Representative: Corradini, Corrado

(56) References cited:
- DE-A- 19 544 858
- US-A- 5 364 696
- US-A- 5 527 570

## Description

This patent concerns the preservation of meat in refrigerated environments, within packs consisting of a tray of expanded synthetic material enclosed in a thin sheet of likewise synthetic material.

It relates in particular to the manufacture of the support trays, which are required not only to be of very low cost, being disposable, but also be able to absorb the liquid which percolates from the fresh meat, and consists mainly of blood and water.

Expanded polystyrene is the material generally used for manufacturing said trays, but generally has virtually no capacity for absorbing liquids because of its closed cell structure and its water-repellent nature.

Consequently the liquids which escape from the meat stagnate on the base of the tray, the meat then becoming partially immersed in its own liquid after a certain time, so compromising proper preservation.

For these reasons layers of absorbent cellulose material are used in the tray construction, located on the base of the tray, or alternatively the trays are formed from sandwich structures consisting of expanded polystyrene/absorbent/expanded polystyrene.

US 5,527,570 discloses a multilayer and multifunctional packaging element comprising an inner porous layer, an intermediate absorbing layer and an outer sheet having high barrier properties toward gases.
The intermediate layer is made of material of fibrous nature such as a needled non wowen fabric.
According to the state of the art the layer forming the inside of the container bottom is perforated to form a passage toward the intermediate absorbent layer.

In this latter case that expanded polystyrene layer forming the inside of the tray bottom is perforated to form a passage towards the intermediate absorbent layer.

This procedure solves the problem, but is expensive because of its complicated construction.

The object of this invention is to provide expanded polystyrene trays clad externally with rigid polystyrene film which, while maintaining the characteristics of known trays in terms of cost and ease of construction, eliminate the aforesaid drawback by being at least partially absorbent without the need to include cellulose materials.

This result is achieved according to the invention by firstly rendering the expanded polystyrene hydrophilic and then creating within the cell structure of the expanded polystyrene passages which carry the liquids into the interior of the tray thickness.

The polystyrene is made hydrophilic by the addition of sodium alkyl-(C₁₀-C₁₈)-sulphonate.

This additive is available commercially in the form of a concentrate (masterbatch) and is normally used as a polystyrene antistatic. The antistatic action is due to the surface active properties which enable the surface to be wetted with resultant dispersion of electrostatic charges.

In our case the same action mechanism is used to enable liquids to infiltrate into the cavities contained in the tray cell structure.

According to the invention, passages are formed which connect together the various constituent cells of the expanded structure such that all the empty spaces, which represent about 95% of the apparent volume of the tray material, become a single vessel in which the liquids are collected.

This result is obtained, according to the invention, with more than normal quantities of the normal additives for regulating cell structure.

These additives are talc, citric acid and sodium bicarbonate, or a product sold under the name of HYDROCEROL® COMPOUND, which if used in much larger than normal quantities give rise to a very fine cell structure.

If the material with these characteristics is then subjected to "stressful" extrusion conditions, the cell walls partially fracture.

Stressful extrusion conditions mean those which subject the material to more severe stress than usual.

Stressful extrusion conditions include for example higher temperatures than normal in the cooling region of the tandem extruder, a greater die aperture, and a greater than 4.5 draft ratio between the die and upper manadrel.

The mandrel is the metal sizing mandrel for the extruded sheet dimensions.

The process of the invention comprises the following steps:
- manufacturing an absorbent expanded sheet by an extrusion process with gas feed;
- bonding with a calender the inner layer of this absorbent expanded sheet to a first rigid film produced by extrusion;
- bonding with a calender the outer layer of this already internally bonded absorbent expanded sheet to a second rigid film produced by extrusion;
- thermoforming and separating portions of said sheet, to obtain the individual trays therefrom.

The absorbent expanded sheet can be bonded to the rigid films not only in the manner indicated in the above sequence, ie by lamination, but also by extrusion coating or coextrusion.

A mixture consisting of the base resin (polystyrene), cellulation regulators (talc and mixtures of citric acid and sodium bicarbonate or hydrocerol® compound) and masterbatch sodium alkyl-(C₁₀-C₁₈)-sulphonate is fed into the hopper of a first extruder.

The said mixture is plasticized therein by heating to higher than 200°C, and is then homogenized by mechanical action.

An expanding agent such as normal-butane, iso-butane and propane is injected into an extruder region in which the various ingredients have already been homogenized. This agent is then homogenized with the rest of the mixture.

The next step is the cooling of the material to a controlled temperature which can vary from 150°C to 180°C, this being achieved in a second extruder from which the material emerges through an aperture (die) having a circular ring cross-section.

The expanded material could also emerge simultaneously with the emergence of rigid material, possibly through a coextrusion die, to hence achieve direct bonding in the die between the expanded layer and the outer rigid film layers described hereinafter.

At the die exit the product assumes a tubular form which is cooled and sized by making it slide along a metal mandrel.

At the end of the mandrel the tube is cut along one or two generators, spread in the form of a sheet and (if the rigid film layers have not been bonded directly in the die) bonded to a first rigid film by hot calendering.

The first rigid film can also be bonded to the expanded part by coextrusion.

On increasing the calender dragging speed, the weight per unit surface area of the obtained sheet decreases for equal material exit speeds from the die, and vice versa, so that besides advancing the material external to the extruder by overcoming the mandrel friction, the dragging action also acts as a sheet density regulator.

The sheet composed of the expanded layer and the first rigid film is then clad with a second rigid film on the side distant from the first film.

The second rigid film is applied by the method used in applying the first rigid film.

The extrusion process of the invention differs from that normally used for non-absorbent sheets in the following points:
- the bonding of the two outer rigid layers,
- the nucleating additives (talc, citric acid and sodium bicarbonate or hydrocerol® compound) are added in quantities of between 1.5 and 4 times the normal,
- the extrusion temperature is higher than usual, and
- the draft ratio between the die and mandrel is at least 4.5 (much higher than usual).

The process by which the sheet is formed into a tray differs from that normally used for non-absorbent sheets by certain modifications to the forming moulds.

The extruder used can be one of the three types normally used for this purpose, ie two-screw extruder with co-rotating screws, single-screw extruder, or tandem extruder.

This latter type of extruder consists of a combination of two single-screw extruders positioned in series, in the first of which the plasticizing, homogenizing and expanding agent injection take place, and in the second of which the cooling and temperature control take place.

When the material leaves the die, the gas dissolved in it escapes to form a very large number of bubbles which expand to form a foam having its cavities (cells) bounded by very thin walls of plastic material, in the particular case described by us there occurring fracture of part of the walls.

The composite sheet obtained in this manner, having its outer side and inner side bonded respectively to the first and second rigid film, is wound on reels and left to stand for a curing period of between one day and a few weeks, depending on its width, its thickness and the density of its constituent material, the reel diameter, and the tension between the sheet turns in the reels.

During curing, the constituent material of the composite sheet cools to ambient temperature, part of the gas contained in the cells also cooling, whereas the remainder disperses into the surrounding environment through the fractured cell walls.

Because of the temperature reduction, the gas still contained in the cells partly dissolves in the material, resulting in a lowering of the internal pressure.

As polystyrene is a gas-permeable material, environmental air slowly enters the cells during the curing time, until the internal and internal partial pressures are in equilibrium.

After a convenient curing time sufficient to complete the described process, the trays are thermoformed.

This stage consists of heating the sheet to replasticize it and enable it to be shaped by drawing within suitable moulds.

During this reheating, to a temperature of between 140°C and 160°C, so-called post-expansion occurs.

During heating, the sheet thickness increases because of release of the expanding agent which was dissolved in the polymer and the rapid thermal expansion thereof and of the air which entered the cells during curing.

The final sheet thickness on termination of this stage, which in known processes normally reaches double the initial thickness, is much less because of the presence of a certain number of already broken cells which do not contribute to the expansion.

During the post-expansion stage, as the still integral cells expand their walls become stretched and thinned, as a result of which some of these cell walls also break.

This structure does not expand in the same manner as the sheet normally obtained by known processes, in fact in extreme cases it could tend to collapse with resultant reduced mechanical characteristics.

This problem of structural weakness is solved by the two outer rigid films which, according to the invention, act as a support for the absorbent expanded structure.

The desired degree of expansion of the intermediate layer is ensured, according to the invention, by the particular thermoforming mould used.

The cavity between the female and male parts of this particular mould is subjected to vacuum which acts on both sides, whereas in the moulds usually used for thermoforming, the forming vacuum acts only on the female part of the mould, the male part providing only the drawing function.

The inner rigid tray film which is to come into contact with the meat can be perforated in two ways:
- by perforating the sheet surface prior to thermoforming, to hence obtain holes distributed randomly over the entire inner surface of the tray,
- by perforating the surface after thermoforming, to hence obtain trays with holes located only in the base.

For proper success of the process, a polystyrene is suggested having a melt flow index (hereinafter M.F.I.) of between 1.3 and 3.5 (grams per 10 minutes).

As stated, the invention uses as nucleating additives the same additives as used for producing closed-cell expanded polystyrene sheets.

However in the process of the invention these additives are used in quantities of between two and four times the usual.

The characteristics of the invention will be more apparent from the ensuing description of some preferred embodiments of the process of the patent, given by way of non-limiting example with reference to the figures of the accompanying drawings.

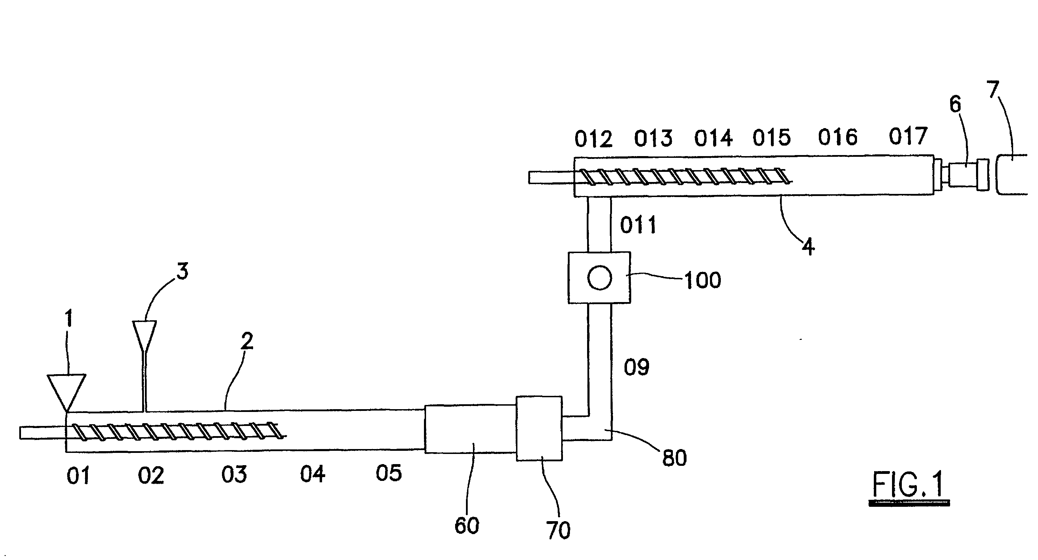

Figure 1 is a schematic illustration of the first part of the plant for implementing the process.
Figure 2 is a schematic view of the central part of the plant.
Figure 3 is a schematic view of the final part of the plant.

Some embodiments of the invention are described hereinafter.

In all the ensuing examples a tandem extruder 2, 4 is used, with the first extruder having an inner diameter of 120 mm and a length of 32 diameters, and the second extruder having an inner diameter of 150 mm and a length of 30 diameters.

It is equipped with a static mixed 60, a filter changer 70, an elbow 80, a pump 100 and an exit die 6.

The die 6 has a diameter of 87 mm and an externally adjustable exit port. Its temperature is regulated by an oil-operated control unit.

A circular air blower of adjustable flow rate is positioned about the expanded tube leaving the die.

Downstream of the die 6 and blower there is provided a metal sizing mandrel 7, having a diameter of 430 mm and an axial length of 1500 mm. The draft ratio between the die and mandrel is 4.94.

The material for extrusion is fed with a volumetric or gravimetric dispenser via the hopper 1.

The mixture of virgin crystalline polystyrene and antistatic masterbatch is prepared in a mixing tank in the following proportions:

| | |
|---|---|
| virgin polystyrene | 1000 kg |
| antistatic masterbatch | 8 kg |

and is then fed into a dispenser by a screw conveyor.

Using this dispenser, the mixture prepared in the tank, regenerated polystyrene, the hydrocerol compound and talc were fed in the quantities stated in the examples.

### EXAMPLE 1

Composition of the mixture prepared in the gravimetric mixer:

| | |
|---|---|
| mixture from tank | 69.2% |
| regenerated polystyrene | 30% |
| talc | 0.5% |
| hydrocerol® compound | 0.3% |

The expanding agent is fed into the extruder at the point 3.

The material used in the example has the following overall composition:

| expanded material | parts by weight |
|---|---|
| crystalline polystyrene | 100 |
| talc | 0.507 |
| hydrocerol® compound | 0.304 |
| antistatic concentrate (masterbatch) | 0.56 |

where the crystalline polystyrene has a melt flow index of 1.7 g/10 min. the hydrocerol compound is a mixture produced by Boehringer Ingelheim containing a mixture of citric acid and sodium bicarbonate; the antistatic masterbatch comprises 30% of polystyrene and 70% of sodium alkyl-(C₁₀-C₁₈)-sulphonate.

The expanding agent used had the following composition:

| | |
|---|---|
| normal butane | 67 parts by weight |
| isobutane | 30 parts by weight |
| propane | 3 parts by weight |

The extruder is operated to respect the following operating conditions:

| | |
|---|---|
| Temperature zone 01 | 162°C |
| Temperature zone 02 | 195°C |
| Temperature zone 03 | 210°C |
| Temperature zone 04 | 210°C |
| Temperature zone 05 | 210°C |
| Temperature in the static mixer 60 | 220°C |
| Temperature in the filter changer 70 | 230°C |
| Temperature in the elbow 80 | 220°C |
| Temperature zone 09 (connection) | 220°C |
| Temperature in the pump 100 | 200°C |
| Temperature zone 011 (seal) | 100°C |
| Temperature zone 012 | 170°C |
| Temperature zone 013 | 160°C |
| Temperature zone 014 | 140°C |
| Temperature zone 015 | 125°C |
| Temperature zone 016 | 105°C |
| Temperature zone 017 | 100°C |
| Temperature in the die 6 | 145°C |
| Pressure first extruder 2 | 300-310 kg/cm² |
| Pressure second extruder 4 | 112 kg/cm² |
| Pressure pump 100 inlet | 180 bar |
| Pressure pump 100 outlet | 265 bar |
| Screw speed first extruder | 82 r.p.m. |
| Screw speed second extruder | 13 r.p.m. |
| Speed pump 100 | 42 r.p.m. |
| Gas flow | 9.7 kg/h |
| Mandrel air diffuser | 2 bar |
| Dragging speed | 14 m/min |

In this case the product obtained is an expanded polystyrene sheet 8 having a thickness of 4,8 mm and a weight of 320 g/m², ie a density of 66.6 g/litre.

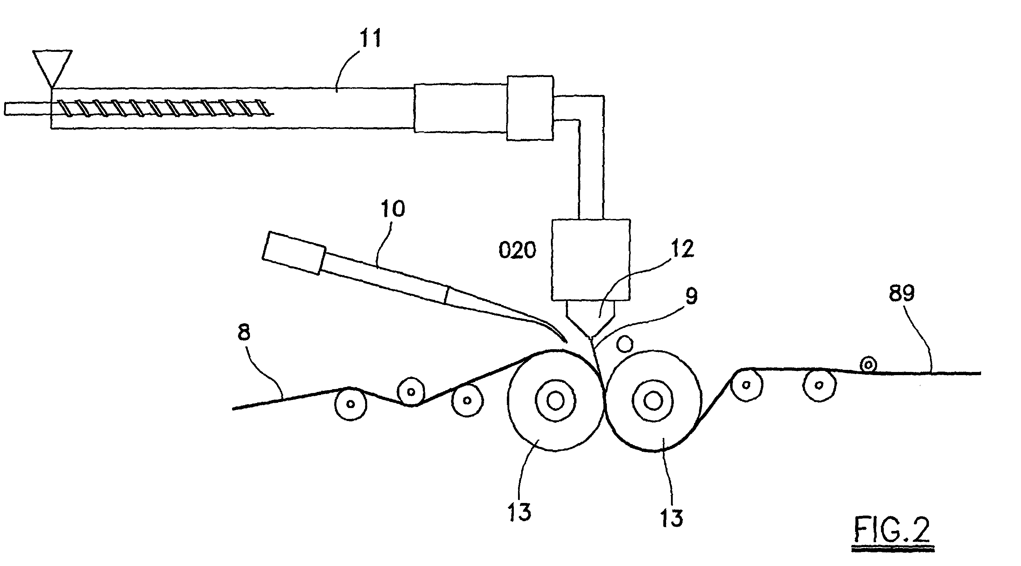

The sheet 8 obtained in this manner is bonded to a first rigid film 9 by the calender 13 as shown in Figure 2.

The absorbent expanded sheet is previously heated with hot air from the blower 10 and is then bonded to the constituent mixture of the film 9, which has the following composition:

| film 9 mixture | parts by weight |
|---|---|
| crystalline polystyrene | 100 |
| high-impact polystyrene | 100 |
| antistatic concentrate (masterbatch) | 3 |
| master white | 4 |

This mixture is extruded by the flat headed die 12 fed by the third extruder 11 positioned above it, and is bonded to the sheet 8 in the calender 13 which has two rolls, one of which is fixed and heated and the other is movable.

The conditions under which this first bonding takes place are as follows:

| | |
|---|---|
| Temperature die 12 zone | 245°C |
| Pressure zone 020 | 105 bar |
| Screw speed third extruder 11 | 92 r.p.m. |
| Fixed roll temperature | 115°C |
| Calender nip | 3 mm |
| Calender roll speed | 14 metres/min |

Under these conditions a first rigid film of 80 micron thickness was bonded to the inner side of the sheet 8 in a quantity of 80 g/m².

The next operation consists of bonding a second rigid film 9' to the outer side of the sheet 8. The composition of the rigid film 9' is as follows:

| film 9' mixture | parts by weight |
|---|---|
| crystalline polystyrene | 100 |
| high-impact polystyrene | 100 |
| master white | 4 |

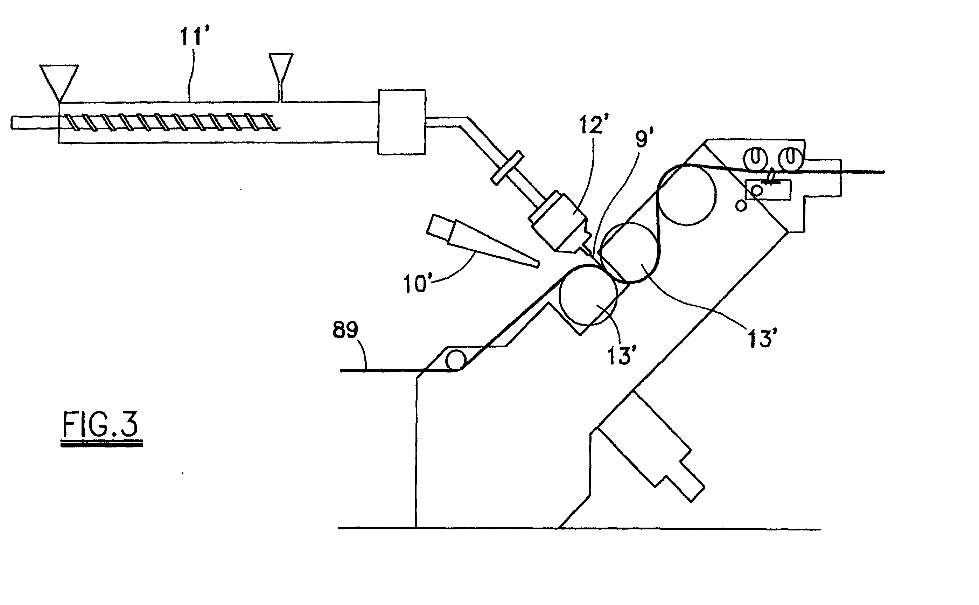

This second bonding is implemented on a second bonding line shown schematically in Figure 3.

Again in this case, before its bonding in the calender 13' to the rigid film produced by the fourth extruder 11' comprising a flat headed die 12', the sheet is preheated by a series of hot air blowers 10'.

Bonding takes place between the heated fixed roll and the movable roll of the calender 13', under the following operating conditions:

| Temperature of the die 12' | 200-250°C |
|---|---|
| Fixed roll temperature | 115°C |
| Nip calender 13' | 3.5 mm |

Under these conditions a rigid film of 80 micron thickness was bonded in a quantity of about 80 g/m².

### EXAMPLE 2

Composition of the mixture prepared in the gravimetric mixer:

| | |
|---|---|
| mixture from tank | 69.2% |
| regenerated polystyrene | 30% |
| talc | 0.4% |
| hydrocerol® compound | 0.4% |

The expanding agent is fed into the extruder at the point 3.

The material used in the example has the following overall composition:

| expanded material | parts by weight |
|---|---|
| crystalline polystyrene | 100 |
| talc | 0.405 |
| hydrocerol® compound | 0.405 |
| antistatic concentrate (masterbatch) | 0.56 |

where the crystalline polystyrene has a melt flow index of 1.7 g/10 min. the hydrocerol compound is a mixture produced by Boehringer Ingelbeim containing a mixture of citric acid and sodium bicarbonate; the antistatic masterbatch comprises 30% of polystyrene and 70% of sodium alkyl-(C₁₀-C₁₅)-sulphonate.

The expanding agent used had the following composition:

| | |
|---|---|
| normal butane | 67 parts by weight |
| isobutane | 30 parts by weight |
| propane | 3 parts by weight |

The extruder is operated to respect the following operating conditions:

| | |
|---|---|
| Temperature zone 01 | 165°C |
| Temperature zone 02 | 195°C |
| Temperature zone 03 | 210°C |
| Temperature zone 04 | 210°C |
| Temperature zone 05 | 215°C |
| Temperature in the static mixer 60 | 220°C |
| Temperature in the filter changer 70 | 230°C |
| Temperature in the elbow 80 | 220°C |
| Temperature zone 09 (connection) | 220°C |
| Temperature in the pump 100 | 200°C |
| Temperature zone 10 (seal) | 100°C |
| Temperature zone 11 | 166°C |
| Temperature zone 12 | 154°C |
| Temperature zone 13 | 142°C |
| Temperature zone 14 | 125°C |
| Temperature zone 15 | 109°C |
| Temperature zone 16 | 100°C |
| Temperature in the die 6 | 150°C |
| Pressure first extruder 2 | 325 kg/cm² |
| Pressure second extruder 4 | 126 kg/cm² |
| Pressure pump 100 inlet | 180 kg/cm² |
| Pressure pump 100 outlet | 271 kg/cm² |
| Screw speed first extruder | 83 r.p.m. |
| Screw speed second extruder | 12.6 r.p.m. |
| Speed pump 100 | 42.3 r.p.m. |
| Gas flow | 9.5 kg/h |
| Mandrel air diffuser | 1.7 kg/cm² |
| Dragging speed | 15 metres/min |

In this case the product obtained is a sheet 8 having a thickness of 4.5 mm and a weight of 300 g/m², ie a density of 66.6 g/litre.

The sheet 8 obtained in this manner is bonded to a first rigid film 9 by the calender 13 as shown in Figure 2.

The sheet 8 is previously heated with hot air from the blower 10 and is then bonded to the constituer of the film 9, which has the following composition:

| film 9 mixture | parts by weight |
|---|---|
| crystalline polystyrene | 100 |
| high-impact polystyrene | 100 |
| antistatic concentrate (masterbatch) | 3 |
| master white | 4 |

This mixture is extruded by the flat headed die 12 fed by the third extruder 11 positioned above it, and is bonded to the sheet 8 in the calender 13 which has two rolls, one of which is fixed and heated and the other is movable.

The conditions under which this first bonding takes place are as follows:

| | |
|---|---|
| Temperature die 12 zone | 245°C |
| Pressure zone 020 | 105 bar |
| Screw speed third extruder 11 | 99 r.p.m. |
| Fixed roll temperature | 115°C |
| Calender nip | 2.6 mm |
| Calender roll speed | 15 metres/min |

Under these conditions a first rigid film of 80 micron thickness was bonded to the inner side of the sheet 8 in a quantity of 80 g/m².

The next operation consists of bonding a second rigid film 9' to the outer side of the sheet 8. The composition of the rigid film 9' is as follows:

| film 9' mixture | parts by weight |
|---|---|
| crystalline polystyrene | 100 |
| high-impact polystyrene | 100 |
| master white | 4 |

This second bonding is implemented on a second bonding line shown schematically in Figure 3.

Again in this case, before its bonding in the calender 13' to the rigid film produced by the fourth extruder 11', which has a flat headed die 12', the sheet is preheated by a series of hot air blowers 10'.

Bonding takes place between the heated fixed roll and the movable roll of the calender 13', under the following operating conditions:

| | |
|---|---|
| Temperature of the die 12' | 200-250°C |
| Fixed roll temperature | 115°C |
| Nip calender 13' | 3.5 mm |

Under these conditions a rigid film of 80 micron thickness was bonded in a quantity of about 80 g/m².

### EXAMPLE 3

Composition of the mixture prepared in the gravimetric mixer:

| | |
|---|---|
| mixture from tank | 69% |
| regenerated polystyrene | 30% |
| talc | 0.5% |
| hydrocerol® compound | 0.5% |

The expanding agent is fed into the extruder at the point 3.

The material used in the example has the following overall composition:

| expanded material | parts by weight |
|---|---|
| crystalline polystyrene | 100 |
| talc | 0.508 |
| hydrocerol® compound | 0.508 |
| antistatic concentrate (masterbatch) | 0.56 |

where the crystalline polystyrene has a melt flow index of 1.7 g/10 min the hydrocerol compound is a mixture produced by Boehringer Ingelheim containing a mixture of citric acid and sodium bicarbonate; the antistatic masterbatch comprises 30% of polystyrene and 70% of sodium alkyl-(C₁₀-C₁₈)-sulphonate.

The expanding agent used had the following composition:

| | |
|---|---|
| normal butane | 67 parts by weight |
| isobutane | 30 parts by weight |
| propane | 3 parts by weight |

The extruder is operated to respect the following operating conditions:

| | |
|---|---|
| Temperature zone 01 | 160°C |
| Temperature zone 02 | 195°C |
| Temperature zone 03 | 210°C |
| Temperature zone 04 | 210°C |
| Temperature zone 05 | 210°C |
| Temperature in the static mixer 60 | 220°C |
| Temperature in the filter changer 70 | 230°C |
| Temperature in the elbow 80 | 220°C |
| Temperature zone 09 (connection) | 220°C |
| Temperature in the pump 100 | 200°C |
| Temperature zone 10 (seal) | 100°C |
| Temperature zone 11 | 170°C |
| Temperature zone 12 | 160°C |
| Temperature zone 13 | 150°C |
| Temperature zone 14 | 130°C |
| Temperature zone 15 | 115°C |
| Temperature zone 16 | 110°C |
| Temperature in the die 6 | 150°C |
| Pressure first extruder 2 | 322 kg/cm² |
| Pressure second extruder 4 | 119 kg/cm² |
| Pressure pump 100 inlet | 180 kg/cm² |
| Pressure pump 100 outlet | 264 kg/cm² |
| Screw speed first extruder | 83 r.p.m. |
| Screw speed second extruder | 12.6 r.p.m. |
| Speed pump 100 | 42 r.p.m. |
| Gas flow | 9.5 kg/h |
| Mandrel air diffuser | 1.7 kg/cm² |
| Dragging speed | 18.7 metres/min |

In this case the product obtained is sheet 8 having a thickness of 4 mm and a weight of 240 g/m², ie a density of 60 g/litre.

The sheet 8 obtained in this manner is bonded to a first rigid film 9 by the calender 13 as shown in Figure 2.

The sheet 8 is previously heated with hot air from the blower 10 and is then bonded to the constituent mixture of the film 9, which has the following composition:

| film 9 mixture | parts by weight |
|---|---|
| crystalline polystyrene | 100 |
| high-impact polystyrene | 100 |
| antistatic concentrate (masterbatch) | 3 |
| master white | 4 |

This mixture is extruded by the flat headed die 12 fed by the third extruder 11 positioned above it, and is bonded to the sheet 8 in the calender 13 which has two rolls, one of which is fixed and heated and the other is movable.

The conditions under which this first bonding takes place are as follows:

| | |
|---|---|
| Temperature die 12 zone | 245°C |
| Pressure zone 020 | 105 bar |
| Screw speed third extruder 11 | 120 r.p.m. |
| Fixed roll temperature | 115°C |
| Calender nip | 2.6 mm |
| Calender roll speed | 18.7 metres/min |

Under these conditions a first rigid film of 80 micron thickness was bonded to the inner side of the absorbent expanded sheet in a quantity of 80 g/m².

The next operation consists of bonding a second rigid film 9' to the outer side of the absorbent expanded sheet. The composition of the rigid film 9' is as follows:

| film 9' mixture | parts by weight |
|---|---|
| crystalline polystyrene | 100 |
| high-impact polystyrene | 100 |
| master white | 4 |

This second bonding is implemented on a second bonding line shown schematically in Figure 3.

Again in this case, before its bonding in the calender 13' to the rigid film produced by the fourth extruder 11', which has a flat headed die 12', the sheet is preheated by a series of hot air blowers 10'.

Bonding takes place between the heated fixed roll and the movable roll of the calender 13', under the following operating conditions:

| | |
|---|---|
| Temperature of the die 12' | 200-250°C |
| Fixed roll temperature | 115°C |
| Nip calender 13' | 2.5 mm |

Under these conditions a rigid film of 80 micron thickness was bonded in a quantity of about 80 g/m².

### EXAMPLE 4

Composition of the mixture prepared in the gravimetric mixer:

| | |
|---|---|
| mixture from tank | 68.8% |
| regenerated polystyrene | 30% |
| talc | 0.4% |
| hydrocerol® compound | 0.8% |

The expanding agent is fed into the extruder at the point 3.

The material used in the example has the following overall composition:

| expanded material | parts by weight |
|---|---|
| crystalline polystyrene | 100 |
| talc | 0.405 |
| hydrocerol® compound | 0.81 |
| antistatic concentrate (masterbatch) | 0.55 |

where the crystalline polystyrene has a melt flow index of 1.7 g/10 min. the hydrocerol compound is a mixture produced by Boehringer Ingelheim containing a mixture of citric acid and sodium bicarbonate; the antistatic masterbatch comprises 30% of polystyrene and 70% of sodium alkyl-(C₁₀-C₁₈)-sulphonate.

The expanding agent used had the following composition:

| | |
|---|---|
| normal butane | 67 parts by weight |
| isobutane | 30 parts by weight |
| propane | 3 parts by weight |

The extruder is operated to respect the following operating conditions:

| | |
|---|---|
| Temperature zone 01 | 160°C |
| Temperature zone 02 | 195°C |
| Temperature zone 03 | 210°C |
| Temperature zone 04 | 210°C |
| Temperature zone 05 | 210°C |
| Temperature in the static mixer 60 | 220°C |
| Temperature in the filter changer 70 | 230°C |
| Temperature in the elbow 80 | 220°C |
| Temperature zone 09 (connection) | 220°C |
| Temperature in the pump 100 | 200°C |
| Temperature zone 10 (seal) | 100°C |
| Temperature zone 11 | 170°C |
| Temperature zone 12 | 155°C |
| Temperature zone 13 | 140°C |
| Temperature zone 14 | 125°C |
| Temperature zone 15 | 110°C |
| Temperature zone 16 | 100°C |
| Temperature in the die 6 | 140°C |
| Pressure first extruder 2 | 315 kg/cm² |
| Pressure second extruder 4 | 105 kg/cm² |
| Pressure pump 100 inlet | 180 kg/cm² |
| Pressure pump 100 outlet | 260 kg/cm² |
| Screw speed first extruder | 83 r.p.m. |
| Screw speed second extruder | 12.6 r.p.m. |
| Speed pump 100 | 42 r.p.m. |
| Gas flow | 9.5 kg/h |
| Mandrel air diffuser | 1.7 kg/cm² |
| Dragging speed | 18.7 metres/min |

In this case the product obtained is a sheet having a thickness of 4.5 mm and a weight of 240 g/m², ie a density of 53 g/litre.

The sheet 8 obtained in this manner is bonded to a first rigid film 9 by the calender 13 as shown in Figure 2.

The sheet 8 is previously heated with hot air from the blower 10 and is then bonded to the constituent mixture of the film 9, which has the following composition:

| film 9 mixture | parts by weight |
|---|---|
| crystalline polystyrene | 100 |
| high-impact polystyrene | 100 |
| antistatic concentrate (masterbatch) | 3 |
| master white | 4 |

This mixture is extruded by the flat headed die 12 fed by the third extruder 11 positioned above it, and is bonded to the sheet 8 in the calender 13 which has two rolls, one of which is fixed and heated and the other is movable.

The conditions under which this first bonding takes place are as follows:

| | |
|---|---|
| Temperature die 12 zone | 245°C |
| Pressure zone 020 | 105 bar |
| Screw speed third extruder 11 | 120 r.p.m. |
| Fixed roll temperature | 115°C |
| Calender nip | 2.6 mm |
| Calender roll speed | 18.7 metres/min |

Under these conditions a first rigid film of 80 micron thickness was bonded to the inner side of the absorbent expanded sheet in a quantity of 80 g/m².

The next operation consists of bonding a second rigid film 9' to the outer side of the absorbent expanded sheet. The composition of the rigid film 9' is as follows:

| film 9' mixture | parts by weight |
|---|---|
| crystalline polystyrene | 100 |
| high-impact polystyrene | 100 |
| master white | 4 |

This second bonding is implemented on a second bonding line shown schematically in Figure 3.

Again in this case, before its bonding in the calender 13' to the rigid film produced by the fourth extruder 11', which has a flat headed die 12', the sheet is preheated by a series of hot air blowers 10'.

Bonding takes place between the heated fixed roll and the movable roll of the calender 13', under the following operating conditions:

| | |
|---|---|
| Temperature of the die 12' | 200-250°C |
| Fixed roll temperature | 115°C |
| Nip calender 13' | 2.5 mm |

Under these conditions a rigid film of 80 micron thickness was bonded in a quantity of about 80 g/m².

After a suitable curing period, the sheets obtained with the materials and operating conditions described in the four preceding examples were subjected to thermoforming.

In contrast to that which takes place in a normal thermoforming operation, in this case the forming vacuum is applied both to the female part and to the male part of the forming mould, to hence obtain a tray having a thickness equal to that determined by the gap left between the female part and male part of the mould, which in our case was fixed at values variable between 4 and 5.5 mm, depending on the dimensions and depth of the tray to be thermoformed. In this respect, greater thicknesses apply to wider and/or deeper trays and, on the contrary, lesser thicknesses to narrower and/or shallower trays.

The next stage is to cut or punch out the tray and to perforate the inner film, in correspondence with the tray base to enable liquid to enter.

This perforation of the inner rigid film in correspondence with the tray base is effected either within the forming mould itself, or during tray cutting, using in both cases a system of variable-stroke punches to adjust the hole depth.

Using the sheets obtained in the preceding four examples, trays were also obtained by thermoforming having the perforations for liquid entry distributed over the entire surface, including the walls. In this case the holes were formed over the entire sheet surface on that side which would represent the inner side of the trays by a roller provided with suitable points.

All the trays of various dimensions obtained from the sheets relative to the four said examples, thermoformed and perforated by the two aforedescribed methods, have the capacity to absorb liquids in a quantity variable from 20 g for the smaller trays (180 x 135 mm) to more than 60 g.

## Claims

1. A process for manufacturing expanded polystyrene meat trays, **characterised by** the following steps:
plasticizing a mixture comprising polystyrene, cellulation regulator materials, and a masterbatch containing sodium alkyl-(C₁₀ C₁₈)-sulphonate in an extruder (2) at a temperature exceeding 200°C;
injecting an expanding agent into an extruder zone (3) in which homogenization of the various ingredients has already occurred;
cooling the material to a constant temperature of between 150°C and 180°C;
extracting the material through a die (6) dimensioned such that the draft ratio between the die and sizing mandrel is at least 4.5;
applying a first rigid film (9) to one side of the material;
applying a second rigid film (9')to the other side of the material;
winding the extrusion-obtained composite sheet comprising the two applied rigid films into reels;
maintaining the reels at ambient temperature for a period of between 1 and 30 days; heating the sheet to a temperature of between 140°C and 160°C;
thermoforming the sheet by drawing within a mould, the cavity of which is put under vacuum both from the female side and from the male side.

2. A process as claimed in claim 1, **characterised in that** the polystyrene has a melt flow index of between 1.5 and 3.5 g/10 min.

3. A process as claimed in claim 1, **characterised in that** the cellulation regulator materials are chosen from talc, citric acid and sodium bicarbonate, taken individually or mixed together.

4. A process as claimed in claim 1, **characterised in that** the mixture comprises from 5.4x10⁻³% to 5.51x10⁻³% of sodium alkyl-(C₁₀-C₁₈)-sulphonate.

5. A process as claimed in claim 1, **characterised in that** the expanding agent is chosen from normal butane, iso-butane and propane.

6. A process as claimed in claim 1, **characterised in that** the first rigid film (9) is obtained by extruding a mixture comprising crystalline polystyrene, anti-impact polystyrene, antistatic concentrate and master white.

7. A process as claimed in claim 1, **characterised in that** the second rigid film (9') is obtained by extruding a mixture comprising crystalline polystyrene, anti-impact polystyrene, and master white.

8. A process as claimed in claim 1, **characterised in that** the mixture has the following composition:
crystalline polystyrene 100 parts by weight
talc 0.450-0.508 parts by weight
hydrocerol® compound 0.304-0.810 parts by weight
antistatic concentrate (masterbatch) 0.550-0.560 parts by weight
in which the crystalline polystyrene has a melt flow index of 1.7 g/10 min;
the hydrocerol compound is a mixture of citric acid and sodium
bicarbonate; the antistatic masterbatch comprises 30% of
polystyrene and 70% of sodium alkyl-(C₁₀-C₁₈)-sulphonate.

9. A process as claimed in claim 1, **characterised in that** the first and second (2, 4) extruder are operated in accordance with the following operating conditions:
Temperature zone 01 (material feed) 160-165°C
Temperature zone 02 190°C
Temperature zone 03 210-215°C
Temperature zone 04 210°C
Temperature zone 05 210-215°C
Temperature in the static mixer 60 220°C
Temperature in the filter changer 70 230-250°C
Temperature in the elbow 80 220°C
Temperature zone 09 (connection) 220°C
Temperature in the pump 100 200°C
Temperature zone 011 (seal) 100°C
Temperature zone 012 166-170°C
Temperature zone 013 154-160°C
Temperature zone 014 140-150°C
Temperature zone 015 125-130°C
Temperature zone 016 101-115°C
Temperature zone 017 100-110°C
Temperature in the die 6 140-150°C
Pressure first extruder 2 300-325 kg/cm²
Pressure second extruder 4 105-126 kg/cm²
Pressure pump 100 inlet 180 bar
Pressure pump 100 outlet 264-271 bar
Screw speed first extruder 82-83 r.p.m.
Screw speed second extruder 12.6-13 r.p.m.
Speed pump 100 42 r.p.m.
Gas flow 9.5-9.7 kg/h
Mandrel air diffuser 1.7-2 bar
Dragging speed 14-18.7 metres/min

10. A process as claimed in claim 1, **characterised in that** the third extruder (11) and its associated calender (13) are operated in accordance with the following operating conditions:
Temperature die 12 zone 245°C
Pressure zone 020 105 bar
Screw speed third extruder 11 92-120 r.p.m.
Fixed roll temperature 115°C
Calender nip 2.6-3 mm
Movable roll speed 17.6 r.p.m.
Fixed roll speed 18.1 r.p.m.

11. A process as claimed in claim 1, **characterised in that** the fourth extruder (11') and its associated calender (13') are operated in accordance with the following operating conditions:
Temperature of the die 12' 200-250°C
Fixed roll temperature 115°C
Fourth extruder screw speed 55 r.p.m.
Nip calender 13' 3.5 mm

## Patentansprüche

1. Verfahren zur Herstellung von Fleischverpackungsschalen aus expandiertem Polystyrol,
**gekennzeichnet durch**
die folgenden Schritte:
Weichmachen einer Mischung aus Polystyrol, Schäumungsregulierungsmaterialien und einem Natriumalkyl-(C₁₀ C₁₈)-Sulfonat enthaltenden Masterbatch bzw. Grundgemisch in einem Extruder (2) bei einer Temperatur von mehr als 200°C;
Einspritzen eines Treibmittels in eine Extruderzone (3), in welcher die Homogenisierung der verschiedenen Bestandteile bereits eingetreten ist;
Kühlen des Materials auf eine konstante Temperatur zwischen 150°C und 180°C;
Extrahieren des Materials **durch** eine Extrusionsdüse (6), die so dimensioniert ist, dass das Ziehverhältnis zwischen Extrusionsdüse und Kalibrierdorn mindestens 4,5 beträgt;
Aufbringen eines ersten starren Films (9) auf eine Seite des Materials;
Aufbringen eines zweiten starren Films (9') auf die andere Seite des Materials;
Aufwickeln der **durch** Extrudieren erhaltenen Verbundfolie mit den zwei aufgebrachten starren Filmen zu Rollen;
Halten der Rollen bei Umgebungstemperatur während einer Dauer zwischen 1 und 30 Tagen;
Erwärmen der Folie auf eine Temperatur zwischen 140°C° und 160°C;
Warmformen der Folie **durch** Ziehen innerhalb einer Form, deren Hohlraum sowohl von der Seite der Matrize als auch von der Seite der Patrize mit Vakuum beaufschlagt ist.

2. Verfahren nach Anspruch 1,
**dadurch gekennzeichnet, dass**
das Polystyrol einen Schmelzfluss-Index zwischen 1,5 und 3,5 g/10 min. aufweist.

3. Verfahren nach Anspruch 1,
**dadurch gekennzeichnet, dass**
die Schäumungsregelulierungsmaterialien aus Talk, Zi-tronensäure und Natriumbikarbonat ausgewählt sind, die einzeln oder zusammengemischt verwendet werden.

4. Verfahren nach Anspruch 1,
**dadurch gekennzeichnet, dass**
das Gemisch 5,4 x 10⁻³% bis 5,51 x 10⁻³% Natriumalkyl-(C₁₀-C₁₈)-Sulfonat enthält.

5. Verfahren nach Anspruch 1,
**dadurch gekennzeichnet, dass**
das Treibmittel aus normalem Butan, Iso-Butan und Propan ausgewählt wird.

6. Verfahren nach Anspruch 1,
**dadurch gekennzeichnet, dass**
der erste starre Film (9) durch Extrudieren eines Gemisches erhalten wird, das kristallines Polystyrol, stoßabsorbierendes Polystyrol, Antistatikkonzentrat und Master White enthält.

7. Verfahren nach Anspruch 1,
**dadurch gekennzeichnet, dass**
der zweite starre Film (9') durch Extrudieren eines Gemisches erhalten wird, das kristallines Polystyrol, stoßabsorbierendes Polystyrol und Master White enthält.

8. Verfahren nach Anspruch 1,
**dadurch gekennzeichnet, dass**
das Gemisch die folgende Zusammensetzung aufweist:
100 Gewichtsteile kristallines Polystyrol
0,450-0,508 Gewichtsteile Talk
0,304-0,810 Gewichtsteile Hydrocerol®-Verbindung
0,550-0,560 Gewichtsteile Antistatikkonzentrat (Masterbatch)
wobei das kristalline Polystyrol einen Schmelzfluss-Index von 1,7 g/10 min. aufweist, wobei
die Hydrocerol-Verbindung ein Gemisch aus Zitronensäure und Natriumbikarbonat ist; und wobei das Antistatik-Masterbatch 30% Polystyrol und 70% Natriumalkyl- (C₁₀-C₁₈)-Sulfonat enthält.

9. Verfahren nach Anspruch 1,
**dadurch gekennzeichnet, dass**
der erste und zweite Extruder (2,4) in Übereinstimmung mit den folgenden Betriebsbedingungen betrieben werden:
Temperatur in Zone 01 (Materialzufuhr) 160-165°C
Temperatur in Zone 02 190°C
Temperatur in Zone 03 210-215°C
Temperatur in Zone 04 210°C
Temperatur in Zone 05 210-215°C
Temperatur in dem statischen Mischer 60 220°C
Temperatur in dem Filterwechsler 70 230-250°C
Temperatur in dem Winkelstück 80 220°C
Temperatur in Zone 09 (Verbindung) 220°C
Temperatur in der Pumpe 100 200°C
Temperatur in Zone 011 (Dichtung) 100°C
Temperatur in Zone 012 166-170°C
Temperatur in Zone 013 154-160°C
Temperatur in Zone 014 140-150°C
Temperatur in Zone 015 125-130°C
Temperatur in Zone 016 101-115°C
Temperatur in Zone 017 100-110°C
Temperatur in der Extrusionsdüse 6 140-150°C
Druck im ersten Extruder 2 300-325 kg/cm²
Druck im zweiten Extruder 4 105-126 kg/cm²
Druck im Einlass der Pumpe 100 180 bar
Druck im Auslass der Pumpe 100 264-271 bar
Schraubendrehzahl erster Extruder 82-83 U/min.
Schraubendrehzahl zweiter Extruder 12,6-13 U/min.
Drehzahl der Pumpe 100 42 U/min.
Gasdurchfluss 9,5-9,7 kg/h
Dorn-Luftverteiler 1,7-2 bar
Zuggeschwindigkeit 14-18,7 m/min.

10. Verfahren nach Anspruch 1,
**dadurch gekennzeichnet, dass**
der dritte Extruder (11) und der diesem zugeordnete Kalander (13) in Übereinstimmung mit den folgenden Betriebsbedingungen betrieben werden:
Temperatur in der Zone von Extrusionsdüse 12 245°C Druck in Zone 020 105 bar
Schraubendrehzahl dritter Extruder 11 92-120 U/min.
Temperatur der feststehenden Walze 115°C
Kalanderwalzenspalt 2,6-3 mm
Drehzahl der bewegbaren Walze 17,6 U/min.
Drehzahl der feststehenden Walze 18,1 U/min.

11. Verfahren nach Anspruch 1,
**dadurch gekennzeichnet, dass**
der vierte Extruder (11') und der diesem zugeordnete Kalander (13') in Übereinstimmung mit den folgenden Betriebsbedingungen betrieben werden:
Temperatur in der Zone von Extrusionsdüse 12' 200-250°C
Temperatur der feststehenden Walze 115°C
Schraubendrehzahl vierter Extruder 55 U/min.
Kalanderwalzenspalt 13' 3,5 mm

## Revendications

1. Procédé de fabrication de barquettes à viande, formées de polystyrène expansé, **caractérisé par** les étapes suivantes :
la plastification d'un mélange contenant du polystyrène, des matières régulatrices de formation de cellules, et une composition principale contenant un alkyl(C₁₀-C₁₈)sulfonate de sodium dans une extrudeuse (2) à une température supérieure à 200 °C,
l'injection d'un agent de dilatation dans une zone (3) de l'extrudeuse dans laquelle l'homogénéisation des divers ingrédients s'est déjà produite,
le refroidissement du matériau à une température constante entre 150 et 180 °C,
l'extraction du matériau par une filière (6) ayant des dimensions telles que le rapport d'étirage entre la filière et le mandrin de mise à la dimension est au moins égal à 4,5,
l'application d'un premier film rigide (9) sur une première face du matériau,
l'application d'un second film rigide (9') à l'autre face du matériau,
l'enroulement de la feuille composite obtenue par extrusion et comportant les deux films rigides appliqués, sous forme de rouleaux,
le maintien des rouleaux à température ambiante pendant une période comprise entre 1 et 30 jours,
le chauffage de la feuille à une température comprise entre 140 et 160 °C, et
le thermoformage de la feuille par aspiration dans un moule dans la cavité est mise sous vide à la fois du côté femelle et du côté mâle.

2. Procédé selon la revendication 1, **caractérisé en ce que** le polystyrène a un indice d'écoulement compris entre 1,5 et 3,5 g/10 min.

3. Procédé selon la revendication 1, **caractérisé en ce que** les matières de régulation de formation des cellules sont choisies parmi le talc, l'acide citrique et le bicarbonate de sodium, considérés individuellement ou en mélange mutuel.

4. Procédé selon la revendication 1, **caractérisé en ce que** le mélange contient 5,4.10⁻³ à 5,51.10⁻³ % d'alkyl(C₁₀-C₁₈)-sulfonate de sodium.

5. Procédé selon la revendication 1, **caractérisé en ce que** l'agent de dilatation est choisi parmi le butane normal, l'isobutane et le propane.

6. Procédé selon la revendication 1, **caractérisé en ce que** le premier film rigide (9) est obtenu par extrusion d'un mélange contenant du polystyrène cristallin, du polystyrène choc, un concentré antistatique et une composition blanche.

7. Procédé selon la revendication 1, **caractérisé en ce que** le second film rigide (9') est obtenu par extrusion d'un mélange qui contient du polystyrène cristallin, du polystyrène choc et une composition blanche.

8. Procédé selon la revendication 1, **caractérisé en ce que** le mélange a la composition suivante :
polystyrène cristallin 100 parties en poids
talc 0,450 à 0,508 partie en poids
composé "Hydrocerol" 0,304 à 0,810 partie en poids
concentré antistatique (composition de base) 0,550 à 0,560 partie en poids
le polystyrène cristallin ayant un indice de fusion égal à 1,7 g/10 min,
le composé "Hydrocerol" étant un mélange d'acide citrique et de bicarbonate de sodium, la composition anti-statique de base contenant 30 % de polystyrène et 70 % d'alkyl(C₁₀-C₁₈)sulfonate de sodium.

9. Procédé selon la revendication 1, **caractérisé en ce que** les première et seconde extrudeuses (2, 4) fonctionnent dans les conditions suivantes de fonctionnement :
température zone 01 (alimentation en matière) 160-165 °C température zone 02 190 °C
température zone 03 210 à 215 °C
température zone 04 210 °C
température zone 05 210 à 215 °C
température dans le mélangeur statique 60 220 °C
température dans l'organe de changement de filtre 70 230 à 250 °C
température dans le coude 80 220 °C
température zone 09 (raccordement) 220 °C
température dans la pompe 100 200 'C
température zone 011 (joint étanche) 100 °C
température zone 012 166 à 170 °C
température zone 013 154 à 160 °C
température zone 014 140 à 150 °C
température zone 015 125 à 130 °C
température zone 016 101 à 115 °C
température zone 017 100 à 110 °C
température dans la filière 6 140 à 150 °C
pression de la première extrudeuse 2 300 à 325 bar (kg/cm²)
pression de la seconde extrudeuse 4 105 à 126 bar (kg/cm²) pression d'entrée de la pompe 100 180 bar
pression de sortie de la pompe 100 264 à 271 bar
vitesse de la vis de la première extrudeuse 82-83 tr/min vitesse de la vis de la seconde extrudeuse 12,6-13 tr/min vitesse de la pompe 100 42 tr/min
débit de gaz 9,5 à 9,7 kg/h
diffuseur d'air du mandrin 1,7 à 2 bar
vitesse d'entraînement 14 à 18,7 m/min.

10. Procédé selon la revendication 1, **caractérisé en ce que** la troisième extrudeuse (11) et sa calandre associée (13) fonctionnent dans les conditions suivantes de fonctionnement :
température de la zone de filière 12 245 °C
pression de la zone 020 105 bar
vitesse de la vis de la troisième extrudeuse 11 92 à 120 tr/min
température de cylindre fixe 115 °C
emprise de calandre 2,6 à 3 mm
vitesse de rouleau mobile 17,6 tr/min
vitesse de rouleau fixe 18,1 tr/min.

11. Procédé selon la revendication 1, **caractérisé en ce que** la quatrième extrudeuse (11') et sa calandre associée (13') fonctionnent dans les conditions de fonctionnement suivantes :
température de la filière 12' 200 à 250 °C.
température du rouleau fixe 115 °C
vitesse de la vis de la quatrième extrudeuse 55 tr/min
emprise de la calandre 13' 3,5 mm.
